# EUROPEAN PATENT SPECIFICATION

(11) **EP 1 470 681 B1**
(45) Date of publication and mention of the grant of the patent: **19.04.2006**
(21) Application number: 01958043.0
(22) Date of filing: 25.07.2001
(51) Int. Cl.: H04L 12/58

(54) **E-MAIL DISTRIBUTION ON THE EDGE**
VERTEILUNG VON ELEKTRONISCHER POST AM RAND
DISTRIBUTION DE MESSAGES ELECTRONIQUES A LA FRONTIERE

(30) Priority: 06.07.2001 US 900561
(43) Date of publication of application: 27.10.2004
(73) Proprietor: Koninklijke Philips Electronics N.V., 5621 BA Eindhoven (NL)
(72) Inventor: KAARS, Peter, NL-5656 AA Eindhoven (NL)
(74) Representative: van der Veer, Johannis Leendert
(86) International application number: PCT/EP2001/008907
(87) International publication number: WO 2003/005655

(56) References cited:
- US-A- 5 856 978
- US-B1- 6 205 432
- HILAL W B-E-D ET AL: "Designing large electronic mail systems" DISTRIBUTED COMPUTING SYSTEMS, 1988., 8TH INTERNATIONAL CONFERENCE ON SAN JOSE, CA, USA 13-17 JUNE 1988, WASHINGTON, DC, USA,IEEE COMPUT. SOC. PR, US, 13 June 1988 (1988-06-13), pages 402-409, XP010013111 ISBN: 0-8186-0865-X

## Description

The invention relates to distribution of electronic content, and in particular to e-mail broadcasts or distribution, e.g., in electronic direct marketing.

E-mail distribution to large groups of subscribers or prospective customers is big business and is expected to grow. For this purpose copies of the same electronic message are sent to thousands of users. This type of email distribution uses a lot of bandwidth as the e-mails travel from one central e-mail server all through the network to the target addresses.

US patent 5,856,978 discloses a message queuing mail system. The system prevents duplication of mail messages at the source when the same mail message is being sent to a plurality of destinations. The system also prevents unnecessary later redirection of mail messages in the mail delivery network, without requiring that the mail delivery network have access to a mail directory. All this it does by defining addressing information and procedures that create, manipulate, and use the addressing information in a way that ensures that messages are replicated and redirected in the mail delivery network only when required.

US patent 6,205,432 discloses a system and method for inserting into an end-user communication message a background reference to an advertisement. The back round reference causes an advertisement image to be tiled, or watermarked, across an end user screen behind the text of an e-mail message. A message server inserts the background reference after receiving a message originally sent from an end user originator and before sending the message to be delivered to an end user recipient. The message server will convert at least a portion of the message into a proper format, such as HTML, before inserting the background reference to an advertisement which is preferably selected in accordance with end user recipient demographic information and/or ad exposure statistics. The message server maintains and refers to records on each end user recipient to allow for selective enablement of background reference insertion and overwriting based upon end user preferences.

The inventor proposes a method of providing a service to enable a party, e.g., a marketing agency or a marketing department of a corporation, to distribute electronic content via a data network to a plurality of addressees. According to the method, specific edge servers are identified for delivery of the content to specific groups among the plurality of the addressees. A respective copy of the content is then sent to a respective one of the edge servers. Each specific edge server is enabled to send respective copies of the content to respective ones of the addressees in the specific group.

More generally, the invention relates to a method of providing a service to enable to distribute electronic content via a data network to a plurality of addressees. The service is provided by, e.g., a dedicated provider from a specific server network. According to the method, respective servers are identified, via which to deliver the content to respective groups among the plurality of the addressees. Then, a copy of the content is sent to the respective server; and the respective server is enabled to send individual copies of the content to individual ones of the addressees in the respective group. A list of identifiers, e.g., e-mail addresses of the addressees of the respective group, is supplied to the respective server. The content comprises, e.g., an e-mail message. Also, a first portion of the content is sent to the respective server, which is enabled to add a second portion to the first portion. Then, the respective server is enabled to send the first and second portions as electronic content to the individual addressees in the respective group. This aspect has advantages if part of the content is uniform to a specific group of addressees. For example, the second portion added by the server relates to geographical information relevant to this group such as a weather forecast, an address of a local or regional dealer, regional price lists, etc.

In the invention, the electronic content, e.g., an electronic message, is sent to a server that is close to the addressees: a so-called edge server, or a server on the edge of the network. An edge server is a server that is physically located close to a server of the ISP of the specific addressees, typically in a local commercial ISP facility. The number of edge servers in a region depends on the number of users in the region. This message to be distributed is sent to an edge server accompanied by a list of addressees residing close to that specific edge server. At the edge server, the message is expanded into a plurality of respective messages for each respective one of the relevant addressees on the list. Alternatively, the edge server further partitions the list of relevant addressees that it has received into respective sub-sets of addressees. The edge server forwards the respective sub-sets and a copy of the message per sub-set to further respective servers downstream of the first edge server. The latter is the case if a mail server has only part of the information to find the servers closest to the addressees, and delegates this task to the edge server first-in-line. An example of this is the internal server network structure of an ISP, which is not visible from the outside.

The invention significantly reduces bandwidth usage, as the electronic content is sent to a relatively small number of edge servers, from which a relatively large number of copies are sent to the relevant addressees. That is, the stage at which the copies are made is postponed until the edge server has been reached.

The invention differs from so-called e-mail reflectors. As known, e-mail can be distributed to lists of addressees as well as to an individual addressee. A shared distribution list can be centrally managed by an e-mail reflector. An e-mail reflector is a software program that serves as a forwarding broadcaster of e-mail messages to the addressees on a distribution list. A sender creates an e-mail message and sends the message to the e-mail reflector on the e-mail server. The e-mail reflector then automatically forwards a copy to each addressee on the pre-defined distribution list

The invention can be applied to an e-mail reflector. The distribution list of the e-mail reflector can be segmented into respective clusters that correspond with respective edge servers based on the location of the server of the addressees' ISPs. The proper segment of the distribution list is sent to the corresponding edge server together with the content to be distributed. The edge servers then have the proper software to serve as a dynamic e-mail reflector, i.e. an e-mail reflector that receives its, possibly segmented distribution list on the fly.

Simple heuristics can be used to identify the location of a user. E.g., many users have e-mail addresses associated with a certain Internet Service Provider (ISP) such as aol.com, yahoo.com. The location of their e-mail servers is known.

Similarly to other big corporations, these ISPs have their own data networks comprising multiple servers residing at different geographic locations. Inside such data networks the address of the server closest to the end-users is typically known.

Edge servers are already used on a large scale for frequently-accessed Web content, playing the role of a cache and are therefore also referred to as cache servers. Especially for streaming Audio and Video media, infrastructures have been built with edge servers, e.g., by Akamai Technologies, Inc. Akamai's EdgeAdvantage platform uses sophisticated algorithms to determine the location of a requesting user, and to determine the closest Akamai edge server from which to deliver content to the end user.

Finally the e-mail servers of users on other domains can be found from public registers. These registers are publicly accessible and cite the IP address as well as the physical location of the machine that hosts the concerning domain.

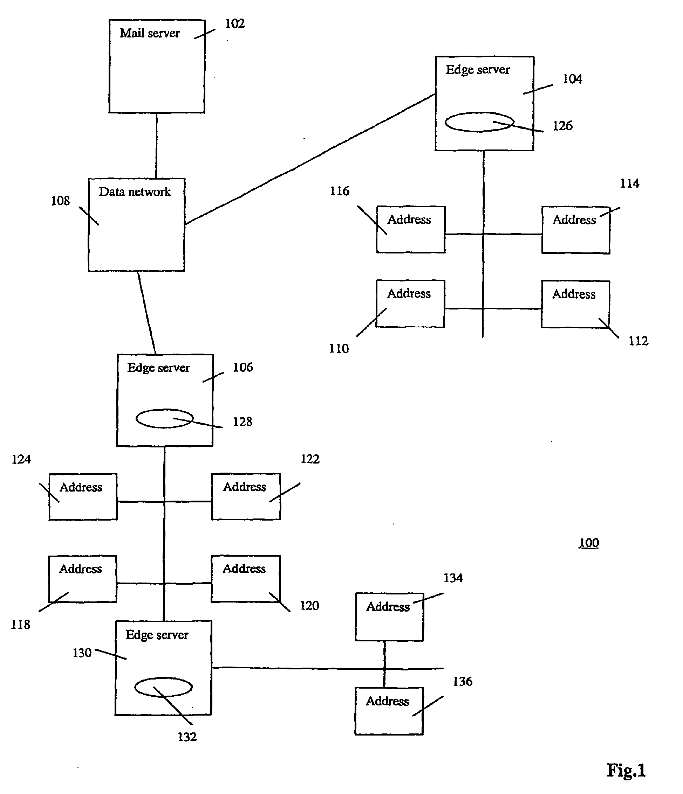

The invention is described in further detail below, by way of example, and with reference to the accompanying drawing, wherein Fig.1 is a block diagram of a system in the invention.

Fig.1 is a block diagram of a system 100 in the invention. System 100 comprises a mail server 102, and edge servers 104 and 106 connected to server 102 via a data network 108. Edge server 104 is close to mail addressees 110, 112, 114 and 116 and functions as an edge server to these addressees. Server 106 is close to addressees 118, 1120, 122 and 124, and functions as an edge server to these addressees.

Server 102 is instructed to distribute an email to each of addressees 110-124. Server 102 has a database of the addresses of each of addressees 110-124, together with a list of the specific edge server associated with each specific one of addressees 110-124. For example, the addresses of addressees 110-116 are associated with edge server 104, and the addresses of addressees 118-124 are associated with edge server 106. The database and lists have been obtained, e.g., through uploading from each server in system 100 a corresponding list of local addresses for which the relevant server acts as an edge server, and possibly filtering out the irrelevant addresses. Alternatively, the lists of addresses and associated edge servers have been obtained in advance through monitoring the data network traffic, e.g., using the system of Akamai Technologies, Inc. Other methods to obtain these email lists may be used as well.

Accordingly, a copy of the email gets sent to edge server 104 with a list of addresses of addressees 110-116, and another copy gets sent to edge server 106 with addresses of addressees 118-124. Edge servers 104 and 106 invoke software 126 and 128 (e.g., a script or an application) to create copies for each of the associated addresses in the list and to have the copies sent to the individual addresses.

Edge server 106 may have to sent a single copy of the message to a further edge server 130 together with a sub-set of addresses received by edge server 106 for addresses 134 and 136. Edge server 130 expands the message and prepares copies for each of addresses 134 and 136 sends the message to each individual one of addresses 134-136.

## Claims

1. A method of providing a service to enable to distribute electronic content via a data network (108) to a plurality of addressees (110, 112, 114, 116; 118, 120, 122, 124), the method comprising:
identifying respective servers (104, 106) via which to deliver a first portion of the content to respective groups (110-116; 118-124) among the plurality of addressees (110, 112, 114, 116; 118, 120, 122, 124),
**characterized in that the method further comprises:**
enabling the respective server (104; 106) to add a respective second portion to the first portion and to send individual copies of the first portion and the respective second portion to individual ones of the addressees (110, 112, 114, 116; 118, 120, 122, 124) in the respective group (110-116; 118-124); wherein different ones of the respective servers (104; 106) add different ones of the respective second portions, and wherein the respective server (104; 106) adds the respective second portion based on a respective geographic location of the respective server (104;106).

2. The method of claim 1, wherein the content comprises an email.

3. The method of claim 1, wherein the enabling to distribute comprises supplying to the respective server (104; 106) a list of identifiers of the addressees (110,112,114, 116; 118,120,122,124) of the respective group (110-116; 118-124).

## Patentansprüche

1. Verfahren zum Leisten eines Dienstes zum Freigeben zum Verteilen von elektronischem Inhalt über ein Datennetzwerk (108) zu einer Anzahl Adressen (110, 112, 114, 116; 118, 120, 122, 124), wobei das Verfahren Folgendes umfasst:
- das Identifizieren der betreffenden Server (104, 106), über die ein erster Teil des Inhalts den betreffenden Gruppen (110-116; 118-124) unter den vielen Adressen (110, 112, 114, 116; 118, 120, 122, 124) geliefert werden soll, **dadurch gekennzeichnet, dass** das Verfahren weiterhin Folgendes umfasst:
- das Freigeben des betreffenden Servers (104; 106) zum Hinzufügen eines betreffenden zweiten Teils zu dem ersten Teil und zum Zusenden einzelner Kopien des ersten teils und des betreffenden zweiten Teils zu einzelnen Adressen der Adressen (110, 112, 114, 116; 118, 120, 122, 124) in der betreffenden Gruppe (110-116; 118-124); wobei verschiedene Server der betreffenden Server (104; 106) verschiedene Teile der betreffenden zweiten Teile hinzufügen, und wobei der betreffende Server (104; 106) den betreffenden zweiten Teil auf Basis einer betreffenden geographische Lage des betreffenden Servers (104; 106) hinzufügt.

2. Verfahren nach Anspruch 1, wobei der Inhalt eine E-Mail enthält.

3. Verfahren nach Anspruch 1, wobei die Freigabe zum Verteilen das Liefern einer Liste mit den Adressen (110, 112, 114, 116; 118, 120, 122, 124) der betreffenden Gruppe (110-116; 118-124)zu dem betreffenden Server (104; 106) umfasst.

## Revendications

1. Procédé de fourniture d'un service pour permettre de distribuer du contenu électronique par l'intermédiaire d'un réseau de données (108) à une pluralité de destinataires (110, 112, 114, 116; 118, 120, 122, 124), le procédé comprenant :
l'identification de serveurs respectifs (104, 106) par l'intermédiaire desquels une première partie du contenu sera distribuée aux groupes respectifs (110 à 116; 118 à 124) parmi la pluralité des destinataires (110, 112, 114, 116; 118, 120, 122, 124),
**caractérisé en ce que** le procédé comprend en outre :
l'habilitation du serveur respectif (104; 106) à ajouter une seconde partie respective à la première partie et à envoyer des copies individuelles de la première partie et de la seconde partie respective à des destinataires individuels parmi les destinataires (110, 112, 114, 116; 118, 120, 122, 124) dans le groupe respectif (110 à 116; 118 à 124); différents serveurs parmi les serveurs respectifs (104; 106) ajoutant des secondes parties différentes parmi les secondes parties respectives, et le serveur respectif (104; 106) ajoutant la seconde partie respective en fonction d'une localisation géographique respective du serveur respectif (104; 106).

2. Procédé selon la revendication 1, le contenu comprenant un courriel.

3. Procédé selon la revendication 1, l'habilitation à distribuer comprenant la fourniture au serveur respectif (104; 106) d'une liste d'identifiants des destinataires (110, 112, 114, 116; 118, 120, 122, 124) du groupe respectif (110 à 116; 118 à 124).
